(19) Europäisches Patentamt / European Patent Office / Office européen des brevets

(11) **EP 4 177 005 B1**

(12) **EUROPEAN PATENT SPECIFICATION**

(45) Date of publication and mention
of the grant of the patent:
**08.07.2026 Bulletin 2026/28**

(21) Application number: **22204625.2**

(22) Date of filing: **31.10.2022**

(51) International Patent Classification (IPC):
**B23Q 5/26** *(2006.01)*      **B23B 39/16** *(2006.01)*
**B23B 39/24** *(2006.01)*     **B23Q 17/09** *(2006.01)*
**B27C 3/04** *(2006.01)*       **B27C 9/04** *(2006.01)*

(52) Cooperative Patent Classification (CPC):
**B23Q 5/261; B23B 39/16; B23B 49/001;**
**B23Q 17/0966; B27C 3/04; B27C 9/04;**
B23B 2260/108; B23B 2270/027

(54) **IMPROVED WORKING UNIT**

VERBESSERTE BEARBEITUNGSEINHEIT

UNITE D'USINAGE AMELIOREE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **08.11.2021 IT 202100028367**

(43) Date of publication of application:
**10.05.2023 Bulletin 2023/19**

(73) Proprietor: **Hiteco S.r.l.**
**47921 Rimini (RN) (IT)**

(72) Inventor: **PERROTTI, Luca**
**47921 RIMINI (RN) (IT)**

(74) Representative: **Tiburzi, Andrea et al**
**Barzanò & Zanardo Roma S.p.A.**
**Via Piemonte 26**
**00187 Roma (IT)**

(56) References cited:
**EP-A1- 3 597 360     WO-A1-2010/053419**
**DE-A1- 4 016 480     US-B1- 10 875 138**

## Description

The present invention relates to an improved working unit, in particular a unit for drilling panels and the like.

## Field of the invention

More specifically, the invention relates to an improved working unit, designed and manufactured in particular for machining pieces made of wood or other materials, such as fiberglass, plastic, metal, or the like, which can be used for any machining process which requires the use of a tool that can wear out with use.

In the following, the description will be directed to a unit for drilling wooden panels, but it is clear that the same should not be considered limited to this specific use.

## Prior art

As is well known, there are currently on the market machine tools equipped with working units having specific tools for carrying out machining operations on workpieces. For example, plants for cutting, drilling, and milling workpieces are known.

In general, with reference in particular to drilling machines, a drilling unit comprises a plurality of working units, equipped with a drilling bit. Said drilling bit is associated, in particular by means of a spindle, with a piston, arranged in a pneumatic cylinder, comprising a shell, a base, and an end stroke element.

Said piston is movably arranged between a retracted position, in which it abuts with said base, and an extracted position, in which it abuts with said limit switch element.

The movement of the piston from said retracted position to said extracted position occurs through the injection of air into the pneumatic cylinder. Also arranged between the piston and the shell of the pneumatic cylinder is a return spring, which tends to return said piston from said extracted position to said retracted position.

The drilling unit is moved, by motor means, in the direction of the workpiece to be machined, from a non-operating position, in which the tool is not in contact with the workpiece to be machined, to a working position, in which the tool interferes with the workpiece.

Before performing the drilling operation, said piston is moved from said retracted position to said extracted position and, subsequently, said drilling group is moved from said non-operating position to said working position.

When the drilling unit is in the working position, the actual drilling operation takes place, during which said drilling group is moved in the direction of the piece to be machined, in such a way that said drilling bit, associated with said spindle, is placed in rotation by a motor, it penetrates inside the piece, making the hole.

As is known, drilling bits tend to wear out with use. There is currently no automatic system available that allows real-time detection of when a drilling bit needs to be replaced. Among other things, the wear of the bits (or of the tool in general) varies according to the section (the surface in contact with the panel) of the same (of the same). Therefore, a bit with a larger section tends to wear more easily than one with a smaller section. Since there is no automatic system for detecting the wear of a bit, the same replacement criterion tends to apply, regardless of the section, with the result that some bits could be replaced when too worn, therefore, they could have worked in non-standard conditions, while others could be replaced ahead of time.

As is known, drilling bits, like all machining tools, are subject to breakage. Since a bit breakage detection system is not available, it is possible to have defective pieces, increasing production waste, with the consequent operating costs.

Furthermore, as is known, when said piston is moved from said retracted position to said extracted position, the tool too, for example still considering a drilling bit, is moved in the same direction.

The relevant prior art also comprises the patent US10875138 B1 and the patent applications WO 2010053419 A1, DE4016480 A1, e EP3597360 A1.

Since a system for detecting the movement in the retracted position of the piston and therefore the relative movement of the bit is not available, errors in positioning the bits could occur, making possible incorrect machining of the piece.

## Scope of the invention

In light of the above, it is, therefore, object of the present invention to propose a system that can automatically detect when a specific tool, such as a specific drilling bit, a circular saw, a milling cutter, and the like has to be replaced.

A further object of the present invention is to provide a system, that can automatically detect the breaking of a specific tool.

Another object of the present invention is to provide a system that can detect the extracted or retracted position of a piston associated with a specific tool.

## Object of the invention

It is, therefore, specific object of the present invention working unit, for carrying out a working, such as drilling, milling, cutting or the like, on a piece made of wood, plastic, fiberglass or the like, comprising a working tool, characterized in that it comprises a detecting device for detecting at least one input of the force exerted by said tool on said piece for carrying out said working.

Always according to the invention, said working unit comprises: a pneumatic cylinder; and a piston associated to said working tool; wherein said piston is movable inside said pneumatic cylinder, between a retracted position, in which said working tool is excluded, and an extracted position, in which said working tool is selected; and said detecting tool may be arranged so that when said piston is in said extracted position, said detecting device interferes with said piston for detecting said at least one input of force exerted by said tool on said piece during said working.

Still according to the invention, said working unit comprises an end stroke element arranged inside said pneumatic cylinder, and when said piston is in said extracted position, said end stroke element, said detecting device and said piston are arranged adjacent to each other, so that said detecting device may detect the force of said piston on said end stroke element.

Further according to the invention, when said piston is in said extracted position, it may be in abutment with said detecting device, interposed between said end stroke element and said piston.

Advantageously according to the invention, said detecting device may be arranged on said end stroke element.

Preferably according to the invention, said detecting device may be coupled to said piston.

Always according to the invention, said detecting device may be a piezoelectric sensor.

Still according to the invention, said detecting device may be a load cell.

Further according to the invention, said tool may be a drilling bit.

Advantageously according to the invention, said force may be the resulting force acting on said detecting device, when said tool carries out said working on said piece, wherein said force is calculated according to the following equation:

$$ R = P_{pn} - P_m $$

wherein:

$P_{pn}$ is the pneumatic pushing force that causes said piston to move from said retracted position to said extracted position; and
$P_m$ is the working resistance force opposed by the piece.

Further according to the invention, said working unit may comprise returning means, such as a returning spring, for returning said piston from said extracted position to said retracted position.

Preferably according to the invention, said force may be the resulting force acting on said detecting device, when said tool carries out said working on said piece, and said force may be calculated according to the following equation:

$$ R = P_{pn} - P_s - P_m $$

wherein:

$P_{pn}$ is the pneumatic pushing force that causes said piston to move from said retracted position to said extracted position;
$P_s$ is the returning force of said returning means; and
$P_m$ is the working resistance force opposed by said piece.

Always according to the invention, said detecting device may generate an electrical signal whose value is a substantially proportional function of the force acting when said tool carries out said working on said piece, and said detecting device may be connected to at least one control unit, configured for detecting said electric signal from said detecting signal.

Always according to the invention, said at least one control unit may be configured for detecting if said piston exerts a mechanical stress on said limit switch element.

It is further object of the present invention drilling group, comprising: a supporting frame having one or more seats; one or more working unit, according to any one of the preceding claims, arranged as a matrix, each one housed in a respective seat of said frame; and an electric motor, associated to said supporting frame, arranged to provide the motive force necessary for moving said working units.

Always according to the invention, said working units may be powered by compressed air for moving each piston of each working unit from said retracted position to said extracted position.

It is also object of the present invention a method for detecting the operating state of a tool such as a drilling bit and the like installed in a working unit as defined above, comprising the steps of:

- detecting said electrical signal generated by the detecting device of said working unit, whose value is a substantially proportional function of the force acting when said tool carries out said working on said piece; and
- verifying if the amplitude of said electrical signal is between a first threshold value and a second threshold value, wherein said second threshold value is greater than said first threshold value;
wherein,
- if the amplitude of said electrical signal is lower than said first threshold value, it is detected that said tool is worn;
- if the amplitude of said electrical signal is greater than said second threshold value, it is detected that said tool is broken;
- if the amplitude of said electrical signal is between said first threshold and said second threshold, then it is detected that said tool is correctly operating.

## Brief description of the figures

The present invention will be now described, for illustrative but not limitative purposes, according to its preferred embodiments, with particular reference to the figures of the enclosed drawings, wherein:

figure 1 shows a perspective view of a drilling unit comprising a plurality of working units;

figure 2 shows a side view of a working unit;

figure 3 shows a sectional view of figure 2;

figure 4 shows a side view of a detail of the working unit of figure 2; and

figure 5 shows a sectional view of figure 4.

## Detailed description

In the various figures, the similar parts will be indicated with the same reference numbers.

An embodiment of the invention is described below by way of non-limiting example.

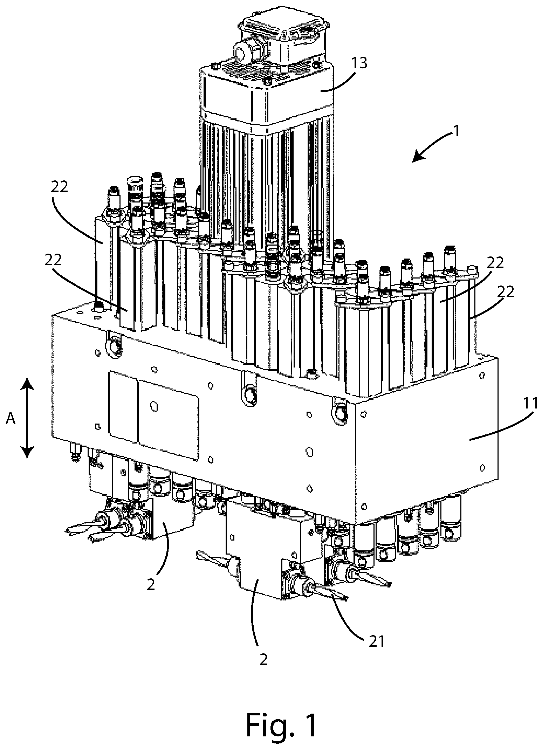

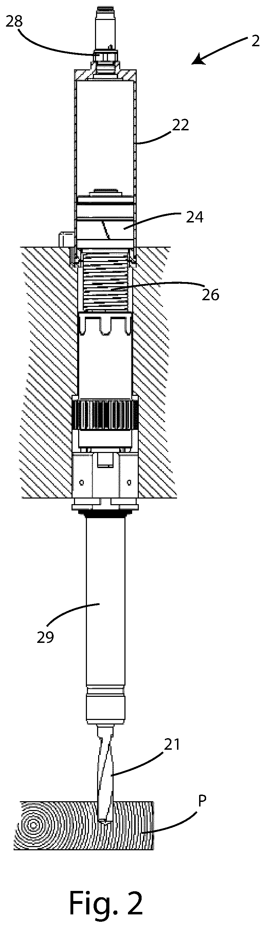

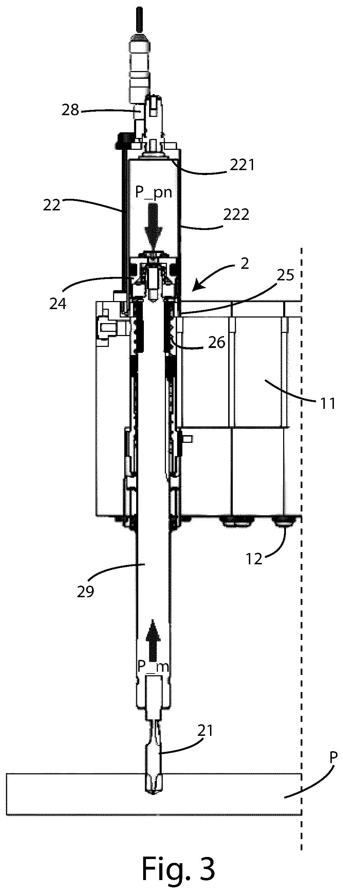

With reference to figures 1, 2, and 3, a drilling group 1 can be seen, on which a plurality of working units 2 are installed for drilling a panel P or a piece in general, using a tool, such as a bit 21.

The drilling group 1 comprising a support frame 11, having a plurality of seats 12, each one of which houses a working unit 2.

The drilling group 1 also comprises an electric motor 13, to provide, by means of suitable transmission (not shown in the figure) installed within said support frame 11, the driving force required to move said working units 2.

The drilling group 1 is also moved by possible further motor means in the direction of the piece to be working, to bring the tool, e.g., the tip 21, into contact therewith. In particular, the drilling group 1 can pass from a non-operative position, in which the bit 21 (or the tool, in general) is not in contact with the piece, to a working position, in which the bit is in contact with the piece.

Each of said working units 2 is equipped with a specific bit 21 possibly of a different section according to the hole to be made. In particular, during drilling, the bit 21 of the selected working unit 2 is placed in contact with a piece P to make one or more holes on one or more faces thereof.

Each working unit 2 comprises a pneumatic cylinder 22 vertically arranged, coupled to said support frame 11 of the drilling group 1. Said pneumatic cylinder 22 is delimited by a base 221 and a shell 222.

Compressed air is injected into the pneumatic cylinder 22 through a compressed air inlet 28. In particular, in the embodiment in the figure, the compressed air inlet 28 is obtained on said base 221. However, in other embodiments, the compressed air inlet 28 can be placed in other alternative positions. For example, said compressed air inlet 28 can be obtained on said shell 222.

cylinder pneumatic 22 also comprises a limit switch or abutment element 25, arranged inside it. In particular, with reference to the present embodiment, said end stroke element 25 is arranged on the inner surface of said shell 222, at an intermediate point of the length of the pneumatic cylinder 22. The function of said end stroke element 25 will be better described below.

Furthermore, each working unit 2 also comprises a piston 24, which is slidably movable inside said pneumatic cylinder 22, between a retracted position, in which it preferably abuts said base 221 of said pneumatic cylinder 22, and an extracted position, wherein said piston 24 exerts a mechanical stress on said end stroke element 25.

Each working unit 2 also comprises a spindle 29, associated with said piston 24. The bit 21 of the working unit 2 is fixed to one end of said spindle 29. The spindle 29 is, in use, driven in rotation by said electric motor 13.

Said end stroke element 25 is arranged so that the piston 24 can in particular be movable from said retracted position, in which it preferably abuts said base 221 of said pneumatic cylinder 22, to said extracted position, in which said piston 24 exerts a mechanical stress on said end stroke element 25.

Said piston 24 is moved by injecting compressed air into the pneumatic cylinder 22 through said compressed air inlet 28.

The working unit 2 also comprises return means, and in particular in the present embodiment, a returning spring 26, which is arranged inside of the pneumatic 22, between said piston 24 and said shell 222. The returning spring 26 is configured to return said piston 24 from said extracted position to said retracted position.

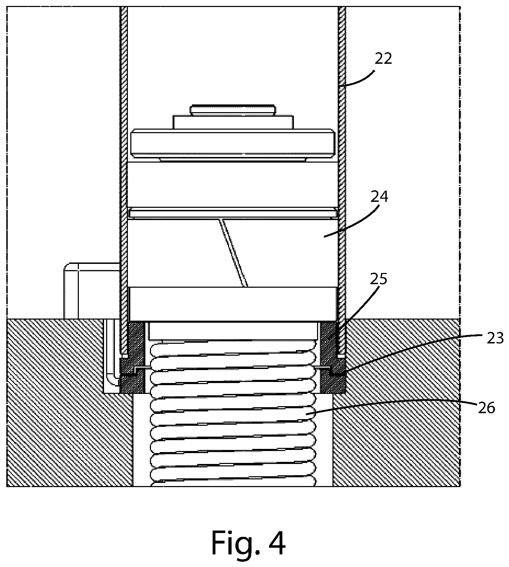

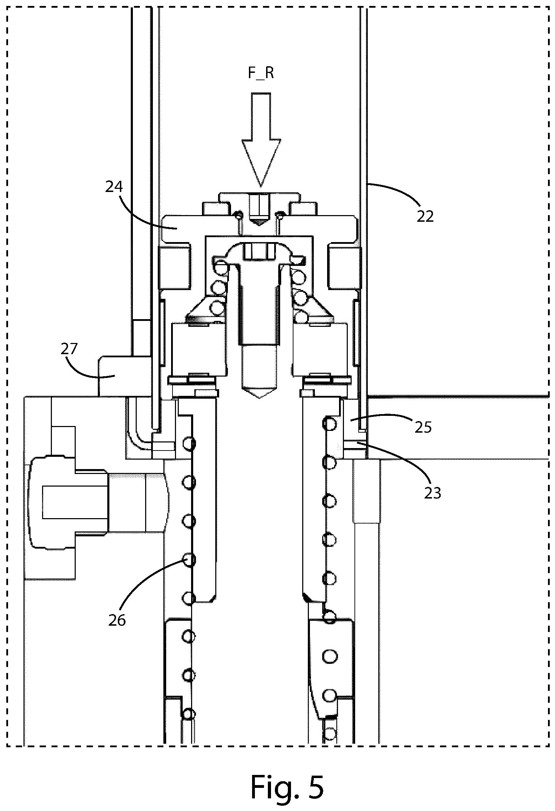

With reference also to figures 4 and 5, said working unit 2 comprises a detecting device 23, arranged on said end stroke element 25, so that, when said piston 24 is in said extracted position, it exerts stress on said end stroke element 25, and said detecting device 23 is interposed between said end stroke element 25 and said piston 24.

Said detecting device 23 is made of piezoelectric material, and it is able to detect the force that said piston 24 exerts on said end stroke element 25.

In a further embodiment said detecting device 23 is arranged in an internal section of said end stroke element 25.

In particular, said piezoelectric detecting device 23 generates an electric signal following the mechanical stress received by the piston 24 on said end stroke element 25. In this way, the force that the piston 24 exerts on the pneumatic cylinder 22 is detected, which, as will be better described below, is proportional to that the bit 21 exerts on the piece P to be drilled.

In alternative embodiments said detecting device 23 can be a load cell or another type of force sensor.

Each drilling group 1 comprises one or a plurality of control units 27, connected to a respective detecting device 23. The control unit 27 detects the electrical signal generated by said detecting device 23, to determine, as better explained below when the force between said piston 24 and said end stroke element 25 is outside a predefinable range of values and/or if said piston 24 exerts mechanical stress on said end stroke element 25.

The working unit 2 described above operates as follows.

Before actually drilling a piece P, the working unit 2 is selected which installs the bit 21 of interest, and compressed air is introduced through the compressed air inlet 28 of the selected working unit 2. This causes the passage of the piston 24 of the working unit 2 chosen from said retracted position, to said extracted position, in which, as mentioned, the piston 24 exerts mechanical stress on said end stroke element 25. At the same time, the returning spring 26 exerts a return force, having a direction opposite to the force exerted by the compressed air on the piston 24.

Subsequently, the spindle 29 is actuated and rotated. With it, the bit 21 is rotated, to drill the piece P.

To start drilling, the drilling group 1 is moved in the direction of the piece P, according to arrow A of figure 1, i.e., in the working position, so that said bit 21 comes into contact and penetrates inside the piece to be machined, making the hole.

When the drilling bit 21 is therefore in contact with a piece P, the resulting force R acting on the detecting device 23 of the selected working unit 2 is given by the algebraic sum of the pneumatic pushing force $P_{pn}$, the returning force $P_s$ of the returning spring 26 and the resistance force to the drilling opposed by the piece P, here indicated with $P_m$

$$R = P_{pn} - P_s - P_m$$

In normal working conditions, the resulting force R is included in a predefined interval between a respective lower threshold value, and a respective upper threshold value.

When the drilling bit 21 wears out, the resistance force to the drilling $P_m$ opposed by the piece P gradually tends to increase, while the pneumatic pushing force $P_{pn}$ and the returning force $P_s$ of the returning spring 26 remains constant.

This results in a decreasing change in the resultant force R. When the resistance force to drilling $P_m$ as said opposed by the piece P increases beyond a threshold value, it is necessary to replace the drilling bit 21.

Bits 21 of different diameters wear out at different times. In order to know when it is necessary to replace a bit 21, the detecting device 23, which in the embodiment under examination is made of piezoelectric material, placed on said end stroke element 25, generates an electric signal for measuring the resultant force R between $P_{pn}$, $P_s$, and $P_m$.

When a bit 21 is excessively worn, the resulting force R becomes less than a predetermined lower threshold value, as the resistance force to drilling $P_m$ increases.

The electric signal generated by the detecting device 23 is processed by the control logic unit 27 in order to emit an alarm or warning signal so that the worn bit 21 can be replaced.

In case of the drilling bit 21 breaks, it is clearly unable to drill the piece P. Therefore, the contribution to the resulting force R due to the resistance force to drilling $P_m$ is null, given that, since there is no drilling, there is no resistance to the drilling opposed by the piece P.

In the case of a broken drilling bit 21, considering that the pneumatic pushing force $P_p$, and the returning force $P_s$ of the returning spring 26 do not vary, the resultant R, exceeds a predetermined upper threshold value.

When this threshold value is exceeded, the detecting device 23 emits an electric signal, processed by the control logic unit 27 in order to emit an alarm or warning signal.

When the piston 24 exerts mechanical stress with the end stroke element 25, the control logic unit 27, by processing the electric signal emitted by the detecting device 23, is also capable of detecting the presence of the piston 24, in order to provide evidence of the extracted position of the piston 24.

## Advantages

An advantage of the present invention is that of allowing the replacement of specific machining tools, in particular drilling bits, as soon as they are subject to a degree of wear, such as to cause non-optimal machining and avoid a late or early replacement.

Another advantage of the present invention is that of reducing the machining waste by detecting the breakage of specific tools.

Yet another advantage of the invention is that of signaling incorrect positioning of the working tools.

The present invention has been described for illustrative but not limitative purposes, according to its preferred embodiments, but it is to be understood that modifications and/or changes can be introduced by those skilled in the art without departing from the scope defined in the enclosed claims.

## Claims

1. Working unit (2), for carrying out a working, such as drilling, milling, cutting or the like, on a piece (P) made of wood, plastic, fiberglass or the like, comprising

a working tool (21),
a detecting device (23) for detecting at least one input of the force (R) exerted by said tool (21) on said piece (P) for carrying out said working, **characterized in that** it comprises:

a pneumatic cylinder (22); and
a piston (24) associated to said working tool (21);
wherein said piston is movable inside said pneumatic cylinder (22), between a retracted position, in which said working tool (21) is excluded, and an extracted position, in which said working tool (21) is selected;

**in that** said detecting device (23) is arranged so that when said piston (24) is in said extracted position, said detecting device (23) interferes with said piston (24) for detecting said at least one input of force (R) exerted by said tool (21) on said piece (P) during said working; and in that it comprises an end stroke element (25) arranged inside said pneumatic cylinder (22), and **in that** when said piston (24) is in said extracted position, said end stroke element (25), said detecting device (23) and said piston (24) are arranged adjacent to each other, so that said detecting device (23) can detect the force of said piston (24) on said end stroke element (25).

2. Working unit (2) according to the preceding claim, **characterized in that** when said piston (24) is in said extracted position, it is in abutment with said detecting device (23), interposed between said end stroke element (25) and said piston (24).

3. Working unit (2) according to claims 1 or 2, **characterized in that** said detecting device (23) is arranged on said end stroke element (25).

4. Working unit (2) according to any one of claims 1 or 2, **characterized in that** said detecting device (23) is coupled to said piston (24).

5. Working unit (2) according to any one of the preceding claims, **characterized in that** said detecting device (23) is a piezoelectric sensor.

6. Working unit (2) according to any one of claims 1-5, **characterized in that** said detecting device (23) is a load cell.

7. Working unit (2) according to any one of the preceding claims, **characterized in that** said tool is a drilling bit (21).

8. Working unit (2) according to any one of the preceding claims, **characterized in that** said force (R) is the resulting force acting on said detecting device (23), when said tool (21) carries out said working on said piece (P), wherein said force (R) is calculated according to the following equation:

$$R = P_{pn} - P_m$$

wherein:

$P_{pn}$ is the pneumatic pushing force that causes said piston (24) to move from said retracted position to said extracted position; and
$P_m$ is the working resistance force opposed by the piece (P).

9. Working unit (2) according to any one of claims 1-7, **characterized in that** it comprises returning means, such as a returning spring (26), for returning said piston (24) from said extracted position to said retracted position.

10. Working unit (2) according to the preceding claim, **characterized in that** said force (R) is the resulting force acting on said detecting device (23), when said tool (21) carries out said working on said piece (P), and said force (R) is calculated according to the following equation:

$$R = P_{pn} - P_s - P_m$$

wherein:

$P_{pn}$ is the pneumatic pushing force that causes said piston (24) to move from said retracted position to said extracted position;
$P_s$ is the returning force of said returning means (26); and
$P_m$ is the working resistance force opposed by said piece (P).

11. Working unit (2) according to any one of the preceding claims, **characterized**

**in that** said detecting device (23) generates an electrical signal whose value is a substantially proportional function of the force (R) acting when said tool (21) carries out said working on said piece (P), and
**in that** said detecting device (23) is connected to at least one control unit (27), configured for detecting said electric signal from said detecting device (23).

12. Working unit (2) according to the preceding claim,

**characterized in that** said at least one control unit (27) is configured for detecting if said piston (24) exerts a mechanical stress on said end stroke element (25).

13. Drilling group (1), comprising:

   a supporting frame (11) having one or more seats (12);
   one or more working unit (2), according to any one of the preceding claims, arranged as a matrix, each one housed in a respective seat (12) of said frame (11); and
   an electric motor (13), associated to said supporting frame (11), arranged to provide the motive force necessary for moving said working units (2).

14. Drilling group (1) according to the preceding claim, **characterized in that** said working units (2) are powered by compressed air for moving each piston (24) of each working unit (2) from said retracted position to said extracted position.

**Patentansprüche**

1. Bearbeitungseinheit (2) zur Durchführung einer Bearbeitung, wie beispielsweise Bohren, Fräsen, Schneiden oder dergleichen, an einem Werkstück (P) aus Holz, Kunststoff, Glasfaser oder dergleichen, bestehend aus

   ein Arbeitswerkzeug (21),
   eine Erfassungsvorrichtung (23) zum Erfassen mindestens einer Komponente der Kraft (R), die von dem Werkzeug (21) auf das Werkstück (P) ausgeübt wird, um die Bearbeitung durchzuführen, **gekennzeichnet durch** wodurch sie Folgendes umfasst:

   ein Pneumatikzylinder (22); und
   einem Kolben (24), der dem Arbeitswerkzeug (21) zugeordnet ist;
   wobei der Kolben innerhalb des Pneumatikzylinders (22) zwischen einer eingefahrenen Position, in der das Arbeitswerkzeug (21) zurückgezogen ist, und einer ausgefahrenen Position, in der das Arbeitswerkzeug (21) ausgewählt ist, beweglich ist;
   wobei die genannte Erfassungsvorrichtung (23) so angeordnet ist, dass, wenn sich der Kolben (24) in wobei die Erfassungsvorrichtung (23) an der genannten ausgefahrenen Position mit dem Kolben (24) in Eingriff steht, um die mindestens eine Kraft (R) zu erfassen, die das Werkzeug (21) während des Arbeitsvorgangs auf das Werkstück (P) ausübt; und **dadurch**, dass sie ein Endhubelement (25) umfasst, das innerhalb des Pneumatikzylinders (22) angeordnet ist, und

   und zwar insofern, als, wenn sich der Kolben (24) in der ausgefahrenen Position befindet, das Endhubelement (25), die Erfassungsvorrichtung (23) und der Kolben (24) nebeneinander angeordnet sind, sodass die Erfassungsvorrichtung (23) die Kraft des Kolbens (24) auf das Endhubelement (25) erfassen kann.

2. Bearbeitungseinheit (2) nach dem vorhergehenden Anspruch, **dadurch gekennzeichnet** und zwar insofern, als der Kolben (24), wenn er sich in der ausgefahrenen Position befindet, an der Erfassungsvorrichtung (23) anliegt, die zwischen dem Endhubelement (25) und dem Kolben (24) angeordnet ist.

3. Bearbeitungseinheit (2) nach Anspruch 1 oder 2, **dadurch gekennzeichnet, dass** die Erfassungsvorrichtung (23) an dem Endhubelement (25) angeordnet ist.

4. Bearbeitungseinheit (2) nach einem der Ansprüche 1 oder 2, **dadurch gekennzeichnet, dass** die Erfassungsvorrichtung (23) mit dem Kolben (24) verbunden ist.

5. Bearbeitungseinheit (2) nach einem der vorstehenden Ansprüche, **dadurch gekennzeichnet, dass** die Erfassungsvorrichtung (23) ein piezoelektrischer Sensor ist.

6. Bearbeitungseinheit (2) nach einem der Ansprüche 1-5, **dadurch gekennzeichnet, dass** die Erfassungsvorrichtung (23) eine Kraftmessdose ist.

7. Bearbeitungseinheit (2) nach einem der vorhergehenden Ansprüche, **dadurch gekennzeichnet, dass** das Werkzeug ein Bohrer (21) ist.

8. Bearbeitungseinheit (2) gemäß einem der vorstehenden Ansprüche, **dadurch gekennzeichnet, dass** die Kraft (R) die auf die Erfassungsvorrichtung (23) wirkende Resultierende ist, wenn das Werkzeug (21) die Bearbeitung an dem Werkstück (P) durchführt, wobei die Kraft (R) gemäß der folgenden Gleichung berechnet wird:

$$R = P_{pn} - P_m$$

   wobei:

   $P_{pn}$ ist die pneumatische Schubkraft, die bewirkt, dass sich der Kolben (24) aus der zurückgezogenen Position in die ausgefahrene Position bewegt; und

$P_m$ ist die Arbeitswiderstandskraft, die das Werkstück (P) entgegenwirkt.

9. Bearbeitungseinheit (2) nach einem der Ansprüche 1-7, **dadurch gekennzeichnet, dass** sie eine Rückstellvorrichtung, wie beispielsweise eine Rückstellfeder (26), umfasst, um den Kolben (24) aus der ausgefahrenen Position in die eingefahrenen Position zurückzuführen.

10. Bearbeitungseinheit (2) gemäß dem vorstehenden Anspruch, **dadurch gekennzeichnet, dass** die Kraft (R) die auf die Erfassungsvorrichtung (23) wirkende Resultierende ist, wenn das Werkzeug (21) die Bearbeitung an dem Werkstück (P) durchführt, und dass die Kraft (R) gemäß der folgenden Gleichung berechnet wird:

$$R = P_{pn} - P_s - P_m$$

wobei:

$P_{pn}$ ist die pneumatische Schubkraft, die bewirkt, dass sich der Kolben (24) aus der eingefahrenen Position in die ausgefahrene Position bewegt;

$P_s$ ist die Rückstellkraft der genannten Rückstellvorrichtung (26); und

$P_m$ ist die Arbeitswiderstandskraft, die von dem genannten Teil (P) entgegengewirkt wird.

11. Bearbeitungseinheit (2) nach einem der vorhergehenden Ansprüche, **dadurch gekennzeichnet dass** die genannte Erfassungsvorrichtung (23) ein elektrisches Signal erzeugt, dessen Wert im Wesentlichen proportional zur Kraft (R) ist, die wirkt, wenn das genannte Werkzeug (21) die genannte Bearbeitung an dem genannten Werkstück (P) durchführt, und wobei die genannte Erfassungsvorrichtung (23) mit mindestens einer Steuereinheit (27) verbunden ist, die so ausgelegt ist, dass sie das genannte elektrische Signal von der genannten Erfassungsvorrichtung (23) erfasst.

12. Bearbeitungseinheit (2) nach dem vorstehenden Anspruch, **dadurch gekennzeichnet, dass** die mindestens eine Steuereinheit (27) so ausgelegt ist, dass sie erfasst, ob der Kolben (24) eine mechanische Belastung auf das Endhubelement (25) ausübt.

13. Bohrgruppe (1), bestehend aus:

ein Tragrahmen (11) mit einem oder mehreren Sitzen (12);

eine oder mehrere Bearbeitungseinheiten (2) gemäß einem der vorstehenden Ansprüche, die als Matrix angeordnet sind und jeweils in einer entsprechenden Aufnahme (12) des Rahmens (11) untergebracht sind; und

ein Elektromotor (13), der mit dem Tragrahmen (11) verbunden ist und dazu dient, die für die Bewegung der Bearbeitungseinheiten (2) erforderliche Antriebskraft bereitzustellen.

14. Bohrgruppe (1) nach dem vorhergehenden Anspruch **dadurch gekennzeichnet, dass** die Bearbeitungseinheiten (2) mit Druckluft betrieben werden, um jeden Kolben (24) jeder Bearbeitungseinheit (2) aus der eingefahrenen Position in die ausgefahrene Position zu bewegen.

## Revendications

1. Unité d'usinage (2) destinée à effectuer une opération, telle que le perçage, le fraisage, la découpe ou autre, sur une pièce (P) en bois, en plastique, en fibre de verre ou similaire, comprenant un outil d'usinage (21),

un dispositif de détection (23) destiné à détecter au moins une composante de la force (R) exercée par ledit outil (21) sur ladite pièce (P) pour effectuer ledit usinage, **caractérisé en ce qu'**il comprend:

un vérin pneumatique (22); et

un piston (24) associé audit outil d'usinage (21);

dans lequel ledit piston est mobile à l'intérieur dudit vérin pneumatique (22), entre une position rétractée, dans laquelle ledit outil d'usinage (21) est escamoté, et une position déployée, dans laquelle ledit outil d'usinage (21) est en place;

**en ce que** ledit dispositif de détection (23) est agencé de telle sorte que, lorsque ledit piston (24) se trouve dans ladite position d'extraction, ledit dispositif de détection (23) interagit avec ledit piston (24) afin de détecter ladite au moins une force d'entrée (R) exercée par ledit outil (21) sur ladite pièce (P) pendant ledit usinage; et en ce qu'il comprend un élément de fin de course (25) disposé à l'intérieur dudit vérin pneumatique (22), et

**en ce que**, lorsque ledit piston (24) se trouve dans ladite position d'extraction, ledit élément de fin de course (25), ledit dispositif de détection (23) et ledit piston (24) sont disposés les uns à côté des autres, de sorte que ledit dispositif de détection (23) puisse détecter la force exercée par ledit piston (24) sur ledit élément de fin de course (25).

**2.** Unité d'usinage (2) selon la revendication précédente, **caractérisée en ce que**, lorsque ledit piston (24) se trouve dans ladite position d'extraction, il est en butée contre ledit dispositif de détection (23), intercalé entre ledit élément de fin de course (25) et ledit piston (24).

**3.** Unité d'usinage (2) selon les revendications 1 ou 2, **caractérisée en ce que** ledit dispositif de détection (23) est disposé sur ledit élément de fin de course (25).

**4.** Unité d'usinage (2) selon l'une quelconque des revendications 1 ou 2, **caractérisée en ce que** ledit dispositif de détection (23) est couplé audit piston (24).

**5.** Unité d'usinage (2) selon l'une quelconque des revendications précédentes, **caractérisée en ce que** ledit dispositif de détection (23) est un capteur piézoélectrique.

**6.** Unité d'usinage (2) selon l'une quelconque des revendications 1-5, **caractérisée en ce que** ledit dispositif de détection (23) est une cellule de charge.

**7.** Unité d'usinage (2) selon l'une quelconque des revendications précédentes, **caractérisée en ce que** ledit outil est un foret (21).

**8.** Unité d'usinage (2) selon l'une quelconque des revendications précédentes, **caractérisée en ce que** ladite force (R) est la force résultante agissant sur ledit dispositif de détection (23) lorsque ledit outil (21) effectue ledit usinage sur ladite pièce (P), ladite force (R) étant calculée selon l'équation suivante:

$$R = P_{pn} - P_m$$

dans lequel:

$P_{pn}$ est la force de poussée pneumatique qui provoque le déplacement dudit piston (24) de ladite position rétractée à ladite position sortie; et
$P_m$ correspond à la force de résistance exercée par la pièce (P).

**9.** Unité d'usinage (2) selon l'une quelconque des revendications 1-7, **caractérisée en ce qu'**elle comprend des moyens de rappel, tels qu'un ressort de rappel (26), destinés à ramener ledit piston (24) de ladite position sortie à ladite position rentrée.

**10.** Unité d'usinage (2) selon la revendication précédente, **caractérisée en ce que** ladite force (R) est la force résultante agissant sur ledit dispositif de détection (23) lorsque ledit outil (21) effectue ledit usinage sur ladite pièce (P), et **en ce que** ladite force (R) est calculée selon l'équation suivante:

$$R = P_{pn} - P_s - P_m$$

dans lequel:

$P_{pn}$ est la force de poussée pneumatique qui provoque le déplacement dudit piston (24) de ladite position rétractée à ladite position sortie;
$P_s$ est la force de rappel dudit moyen de rappel (26); et
$P_m$ correspond à la force de résistance exercée par ladite pièce (P).

**11.** Unité d'usinage (2) selon l'une quelconque des revendications précédentes, **caractérisée**

**en ce que** ledit dispositif de détection (23) génère un signal électrique dont la valeur est une fonction sensiblement proportionnelle à la force (R) agissant lorsque ledit outil (21) effectue ledit usinage sur ladite pièce (P), et
**en ce que** ledit dispositif de détection (23) est relié à au moins une unité de commande (27), conçue pour détecter ledit signal électrique provenant dudit dispositif de détection (23).

**12.** Unité d'usinage (2) selon la revendication précédente, **caractérisée en ce que** ladite au moins une unité de commande (27) est conçue pour détecter si ledit piston (24) exerce une contrainte mécanique sur ledit élément de fin de course (25).

**13.** Ensemble de forage (1), comprenant:

un châssis de support (11) comportant un ou plusieurs sièges (12);
une ou plusieurs unités d'usinage (2), selon l'une quelconque des revendications précédentes, disposées en matrice, chacune étant logée dans un logement respectif (12) dudit châssis (11); et
un moteur électrique (13), associé audit châssis de support (11), agencé pour fournir la force motrice nécessaire au déplacement desdites unités d'usinage (2).

**14.** Ensemble de forage (1) selon la revendication précédente,
**caractérisé en ce que** lesdites unités d'usinage (2) sont actionnées par de l'air comprimé afin de déplacer chaque piston (24) de chaque unité d'usinage (2) de ladite position rétractée à ladite position déployée.

Fig. 1

Fig. 2

Fig. 3

Fig. 4

F_R

24

22

27

25

23

26

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10875138 B1
- WO 2010053419 A1
- DE 4016480 A1
- EP 3597360 A1